# EUROPEAN PATENT APPLICATION

(11) **EP 4 559 572 A1**
(43) Date of publication of application: **28.05.2025**
(21) Application number: 23211946.1
(22) Date of filing: 24.11.2023
(51) Int. Cl.: B01J 21/08, B01J 23/89, B01J 35/30, B01J 35/40, B01J 37/02, B01J 37/03, B01J 37/18, C07C 7/00

(54) **HYDROGENATION CATALYST FOR STYRENIC POLYMERS**

(71) Applicant: SABIC Global Technologies B.V., 4612 PX Bergen op Zoom (NL)
(72) Inventor: Wu, Liheng, 562125 Bengaluru (IN)
(74) Representative: Sabic INDIA Intellectual Property Group

(57) **Abstract**

The invention relates to a hydrogenation catalyst for hydrogenating a styrenic polymer, comprising: (a) >_ 99.1 wt.% and ≤ 99.95 wt.% of a metal oxide support; and (b) ≥ 0.05 wt.% and ≤ 0.9 wt.% of metal alloy nanoparticles, wherein the metal alloy is represented by the formula FeₓPt₁₀₀₋ₓ, wherein `x' is a number ranging from > 10.0 and < 50.0; preferably 'x' is a number ranging from > 10.0 and < 49.0, preferably 'x' is a whole number ranging from > 11.0 and < 45.0. The invention further relates to a process for preparing the hydrogenation catalyst, a method for the hydrogenation of a styrenic polymer and use of the hydrogenation catalyst.

## Description

### FIELD OF INVENTION

The invention relates to the field of catalysis, in particular relates to a hydrogenation catalyst for hydrogenating a styrenic polymer. The invention further relates to a process for preparing the hydrogenation catalyst, a method for the hydrogenation of a styrenic polymer and the use of the hydrogenation catalyst.

### BACKGROUND

Hydrogenation of aromatic polymers into saturated ones can improve their physical properties, such as thermal, mechanical properties, and oxidative stability. Homogeneous and heterogeneous catalysts are typically used for this hydrogenation process. Compared to homogeneous catalysts, heterogeneous catalysts offer the advantage of separation from the polymer solutions (final product). However, such catalyst systems suffer from low reaction rates due to steric hindrances brought about by bulky and long polymer chains, resulting in inaccessibility of polymer molecules to the active sites. The hydrogenation of aromatic polymers has been studied using many different heterogeneous catalysts. The process continues to suffer from such low reaction rates. In addition, it has also been observed that hydrogenation rate for such catalyst sharply deteriorates over multiple cycles of hydrogenation, reducing process efficiency and increasing the operational cost when using such catalysts in commercial scale production.

To improve reaction rate during polymer hydrogenation, non-porous calcium carbonate and barium sulphate supports, have been utilized in the past. These catalysts suffer in that they have low surface area and poor preparation methods resulting in low metal dispersion and thereby low catalytic activity. To improve hydrogenation rates, Pt-based supported catalysts have been developed.

For example, WO2022013751A1 relates to supported catalysts for catalytic hydrogenation of an aromatic containing polymer. Although, the catalysts systems disclosed in the published application are promising, there is still a requirement to further improve the catalytic activity of catalyst systems for the hydrogenation of styrenic polymers while retaining catalytic performance or stability over multiple cycles of hydrogenation.

Therefore, it is an objective of the present invention to provide catalyst systems for the hydrogenation of styrenic polymers with improved catalytic activity while retaining desired catalytic performance over multiple cycles of hydrogenation.

### DESCRIPTION

This objective is now achieved by a hydrogenation catalyst in accordance with the present invention. Accordingly, the invention provides for a hydrogenation catalyst for hydrogenating a styrenic polymer, comprising:
a) ≥ 99.1 wt.% and ≤ 99.95 wt.% of a metal oxide support; and
b) ≥ 0.05 wt.% and ≤ 0.9 wt.% of metal alloy nanoparticles, wherein the metal alloy is represented by the formula FeₓPt₁₀₀₋ₓ, wherein `x' is a number ranging from > 10.0 and < 50.0, preferably > 10.0 and < 49.0, preferably > 10.0 and < 30.0, preferably > 10.0 and < 25.0.

Advantageously, the hydrogenation catalyst of the present invention has excellent catalytic activity and performance stability even after multiple cycles of hydrogenation of a styrenic polymer. In an aspect of the invention, the invention relates to the use of the hydrogenation catalyst in accordance with the present invention for improving the hydrogenation conversion of a styrenic polymer after multiple cycles of hydrogenation, preferably at over least three cycles of hydrogenation, preferably over at least four cycles of hydrogenation.

Preferably, the ratio of 'x/ 100-x' is > 0.11 and < 0.98. Preferably, the ratio of `x/ 100-x' is > 0.11 and < 0.40, preferably the ratio of `x/ 100-x' is > 0.11 and < 0.30. The variable `x' is as defined in this disclosure.

Preferably, wherein the hydrogenation catalyst has a platinum metal loading of > 0.36 wt.% and < 0.45 wt.%, with regard to the total weight of the hydrogenation catalyst.

Preferably, wherein the metal oxide support is selected from silica, alumina, titania and combinations thereof, preferably wherein the metal oxide support is silica.

Preferably wherein each of the metal alloy has an average particle size ranging from > 0.5 nm to < 5.0 nm, preferably > 0.5 nm to < 3.0 nm.

Preferably wherein the catalyst has a median particle diameter of < 10.0 µm, preferably < 5.0 µm, when determined using dynamic light scattering in accordance with ASTM E3247-20.

The support used in the hydrogenation catalyst of the present invention may have a pore volume support (pore volume less than 0.4 cm³/g).

The hydrogenation catalyst may have a specific surface area of at least 5 m²/g to 45 m²/g, or 5 m²/g to 40 m²/g, or 5 m²/g to 20 m²/g or 5 m²/g, 10 m²/g, 15 m²/g, 20 m²/g, 25 m²/g, 30 m²/g, 35 m²/g, 40 m²/g, or 45 m²/g, or any value or range there between.

The pore volume of the hydrogenation catalyst can be 0.01 cm³/g to 0.35 cm³/g, or 0.03 cm³/g to 0.3 cm³/g, or 0.05 cm³/g to 0.25 cm³/g, or any value or range there between.

The median particle diameter of the hydrogenation catalyst may be less than 300 microns, preferably less than 150 microns or 300, 250, 200, 150, 100, 50, 25, 15, 10, 1 microns or less, but greater than 0.1 micron. The support can be alumina, titania , silica, or combinations thereof. The support can be in powder form. In a preferred embodiment, the support is not in an extrudate or a bead form.

The hydrogenation catalyst has an excellent catalytic activity even after subjecting the hydrogenation catalyst to multiple cycles of hydrogenation. For example, wherein after subjecting the hydrogenation catalyst to 'n' cycles of hydrogenation, the catalyst retains a hydrogenation conversion of > 98.0 %, preferably > 99.0 %, wherein hydrogenation conversion is defined by the formula: hydrogenation conversion = (1 - (moles of aromatic rings present in the styrenic polymer after hydrogenation / total moles of aromatic rings present in the styrenic polymer prior to hydrogenation))* 100, further wherein 'n' is an integer ranging from 1 to 6, preferably 'n' is 4.

The metal alloy may be represented by the formula FeₓPt₁₀₀₋ₓ wherein `x' is a number ranging from > 10.0 and < 50.0, preferably > 10.0 and < 49.0, preferably > 10.0 and < 30.0, preferably > 10.0 and < 25.0.

Preferably, 'x' is a number ranging from > 10.0 and < 25.0, preferably > 10.0 and < 23.0, preferably > 10.0 and < 22.0. Preferably, `x' is a number ranging from > 30.0 and < 40.0, preferably > 41.0 and < 49.0.

Preferably, the hydrogenation catalyst for hydrogenating a styrenic polymer, comprises:
a) ≥ 99.1 wt.% and ≤ 99.95 wt.% of a metal oxide support; and
b) ≥ 0.05 wt.% and ≤ 0.9 wt.% of metal alloy nanoparticles, wherein the metal alloy is represented by the formula FeₓPt₁₀₀₋ₓ, wherein the metal oxide is silica and the value of 'x' is 48.0.

Preferably, the hydrogenation catalyst for hydrogenating a styrenic polymer, comprises:
a) ≥ 99.1 wt.% and ≤ 99.95 wt.% of a metal oxide support; and
b) ≥ 0.05 wt.% and ≤ 0.9 wt.% of metal alloy nanoparticles, wherein the metal alloy is represented by the formula FeₓPt₁₀₀₋ₓ, wherein the metal oxide is silica and the value of 'x' is 21.0.

Preferably, the hydrogenation catalyst for hydrogenating a styrenic polymer, comprises:
a) ≥ 99.1 wt.% and ≤ 99.95 wt.% of a metal oxide support; and
b) ≥ 0.05 wt.% and ≤ 0.9 wt.% of metal alloy nanoparticles, wherein the metal alloy is represented by the formula FeₓPt₁₀₀₋ₓ, wherein the metal oxide is silica and the value of 'x' is 11.0.

The process of preparing the hydrogenation catalyst may include contacting a slurry that includes 1) a silica (SiO₂) or a titania (TiO₂) metal oxide support in powder form, water, and a base ( e.g ., ammonium hydroxide or a metal hydroxide), or 2) an alumina metal oxide support, water, and an acid (e.g., hydrochloric acid or nitric acid), with a catalytic metal precursor composition (e.g, platinum salt, a palladium salt, or a ruthenium salt, or a combination thereof) to produce a catalytic metal precursor/metal oxide support composition.

The catalytic metal precursor/metal oxide support composition may be reduced under conditions to produce the catalysts of the present invention. The process may include drying the catalytic metal precursor/metal oxide support composition prior to the reduction step under reducing conditions that can include contacting the catalytic metal precursor/metal oxide support composition with H₂ at 150 °C to 600 °C, preferably 250 °C to 450 °C, more preferably 300 °C to 400 °C or any value or range there between.

In an aspect of the invention, the process for preparing the hydrogenation catalyst according to the present invention, comprises the steps of:
a) preparing an aqueous slurry comprising a metal oxide;
b) stirring the aqueous slurry in presence of a base;
c) adding a platinum salt and a ferric salt to the slurry obtained in step (b) to obtain a catalyst precursor;
d) separating the catalyst precursor from the slurry and drying the catalyst precursor; and
e) heating the catalyst precursor in presence of hydrogen and nitrogen at a temperature rate of 10 °C /min from 25 °C to 400 °C to obtain the hydrogenation catalyst, preferably wherein the ferric salt is added in an amount ranging from > 4.0 wt.% and < 32.0 wt.% with regard to the total weight of the platinum salt.

In yet another aspect of the invention, the invention relates to a method for the hydrogenation of a styrenic polymer, the method comprising: contacting the hydrogenation catalyst according to the present invention with the styrenic polymer in presence of hydrogen (H₂) under conditions sufficient to produce a hydrogenated polymer.

Preferably the styrenic polymer is polystyrene and the hydrogenated polymer is poly (vinyl cyclohexane).

The method in particular may include contacting a catalyst of the present invention with a polymer that includes at least one aromatic ring in the presence of hydrogen gas under conditions sufficient to produce a polymer composition that includes at least one hydrogenated and/or at least one partially hydrogenated aromatic ring.

The aromatic containing polymer can include a polystyrene group and the hydrogenated or partially hydrogenated polymer can include a poly(vinyl cyclohexane) group. The hydrogenated or partially hydrogenated polymer composition may be free or substantially free of polymer scission compositions. The catalyst contacting conditions may be carried out at a temperature of 120 °C to 200 °C or any range or value there between.

The hydrogenation catalyst of the present invention may be contacted with the styrenic polymer at a temperature of 110 °C to 200 °C, preferably 120 °C to 145 °C and at a hydrogen pressure of ≥ 5000 kPa and ≤ 8000 kPa, preferably ≥ 5500 kPa and ≤ 7000 kPa, to produce a hydrogenated polymer.

### EXAMPLES

**Purpose:** Demonstrate the catalytic activity of the inventive catalyst compositions (Inv1, Inv2 and Inv3) in accordance with the present invention with that of the comparative samples (Comp1, Comp2, and Comp3).

### Method of preparation -

For Sample Inv1 (Fe₁₁Pt₈₉/SiO₂) - SiO2 (commercial silica) that had been calcined under static air at 820 °C for 5 h, and having a surface area of 17.2 m2/g, a pore volume of 0.22 cm3/g, and a median particle diameter (D50) of less than 5 microns, 6 grams), was dispersed in 60 mL of deionized H₂O. Ammonium hydroxide solution (28 - 30 wt.%, 0.78 mL) was added into the mixture, and the resulting slurry was stirred for 30 min.

A platinum salt was prepared from Tetraammineplatinum(II) chloride (53.6 mg) that was dissolved in H₂O (1 mL) to form a slurry, followed by the addition of a solution of 3 mg of (ferric salt) FeCl₃ dissolved in 1 mL of deionized H₂O. The resultant mixture was stirred for another 1.5 hrs. (Ratio of ferric salt added with respect to platinum salt - (3/53.6 ~ 5.6%) The resulting catalyst precursor/support material was separated from the slurry using vacuum filtration. The solid catalyst precursor/support material was washed (3 times) with deionized water (100 mL) and then dried in a drying oven at 90 °C overnight to obtain the catalyst precursor/support material as a dry powder.

The dry powder was subsequently reduced in a horizontal tube furnace using 10 % H₂ balanced N₂ with a total flowrate of 500 standard cubic centimeter per min under the following conditions: a temperature rate of 10 °C /min from 25 °C to 400 °C and maintained at 400 °C for 1 hr before cooling to room temperature.

The catalyst Inv1 had a Pt weight loading of 0.42 wt.% and the Fe : Pt molar ratio of 11 : 89 as determined by the ICP analysis.

**For Sample Inv2 (Fe₂₁Pt₇₉/SiO₂)** - The sample was prepared similar to that of Inv 1 sample except the ratio of ferric salt added with respect to platinum salt was ~ 15.0 wt.%. (8 mg of FeCl₃/53.6 mg of tetraammineplatinum(II) chloride).

The catalyst had a Pt weight loading of 0.38 wt.% and the Fe : Pt molar ratio of 21 : 79 as determined by the ICP analysis.

**For Sample Inv3 (Fe₄₈Pt₅₂/SiO₂)** - The sample was prepared similar to that of Inv 1 sample except the ratio of ferric salt added with respect to platinum salt was ~ 30.0 wt.%. (16 mg of FeCl₃/53.6 mg of tetraammineplatinum(II) chloride).

The catalyst had a Pt weight loading of 0.38 wt.% and the Fe : Pt molar ratio of 48 : 52 as determined by the ICP analysis.

**For Sample Comp1 (Fe₆₇Pt₃₃/SiO₂):** The sample was prepared similar to that of Inv 1 sample except the ratio of ferric salt added with respect to platinum salt was ~ 74.6 wt.%. (40 mg of FeCl₃/53.6 of tetraammineplatinum(II) chloride).

The catalyst had a Pt weight loading of 0.38 wt.% and the Fe : Pt molar ratio of 67:33 as determined by the ICP analysis.

**For Sample Comp2 (Fe₈₈Pt₁₂/SiO₂):** The sample was prepared similar to that of Inv 1 sample except the ratio of ferric salt added with respect to platinum salt was ~ 370.0 wt.% (32.4 mg of FeCl₃/8.7 mg of tetraammineplatinum(II) chloride.

The catalyst had a Pt weight loading of 0.09 wt.% and the Fe : Pt molar ratio of 88:12 as determined by the ICP analysis.

**For Sample Comp3 (Pt/SiO₂):** SiO₂ (commercial silica, calcined under static air at 820 °C for 5 h, having a surface area of 17.2 m²/g, a pore volume of 0.22 cm³/g, and a median particle diameter (D₅₀) of less than 5 microns, 6 grams) was dispersed in deionized H₂O (60 mL). Ammonium hydroxide solution (28 - 30 wt.%, 0.78 mL) was added into the mixture, and the slurry was stirred for 30 min. Tetraammineplatinum(II) chloride (53.6 mg) dissolved in H₂O (1 mL) was added into the slurry and then the mixture was stirred for 1.5 hrs. The resulting catalyst precursor/support material was separated from the slurry using vacuum filtration. The solid catalyst precursor/support material was washed (3 times) with deionized water (100 mL) and then dried in a drying oven at 90 °C for overnight to produce the catalyst precursor/support material as a dry powder. The catalyst precursor/support dry powder was reduced in a horizontal tube furnace using 10 % H₂ balanced N₂ with a total flowrate of 500 standard cubic centimeter per min under the following conditions: a temperature rate of 10 °C /min from 25 °C to 400 °C and keep at 400 °C for 1 hr before cooling to room temperature. The catalyst of the present invention had a Pt weight loading of 0.41 wt.% as determined by ICP anlysis.

**Measurement of catalytic activity:** 0.2 g of each catalyst samples were placed in a 100 mL stainless steel reactor (Parr Series 5000 Multiple Reactor System, Parr Instrument Company) together with 30 mL of cyclohexane and 2.0 g of polystyrene (SABIC, average molecular weight M_{w} = 235,000). The reactor was purged first with N₂ for three times, and then with H₂ three times to remove air and moisture. The reactor was then charged with high-pressure H₂ to the desired reaction pressure, typically 1000 psi.

Subsequently, the reactor content was heated to 140 °C at a rate of 5 °C/min, and maintain at the final set temperature for a certain time, generally less than 12 hr. After the reaction finishes, the reactor was cooled to room temperature, the pressure was discharged to atmospheric pressure (101 kPa), the contents in the reactor was recovered, and the solid catalysts were separated from the polymer solution via centrifugation or filtration.

The conversion of aromatic rings was determined by comparing the Fourier Transfer Infrared (FT-IR) spectrum of the final polymer product using a FT-IR spectrometer (NICOLET iS50 FT-IR) with that of unsaturated polystyrene (the unsaturated aromatic rings show a distinct IR absorptions at about 700 cm⁻¹ due to out-of-plane bends for the C-H bond attached to the aromatic rings). The molecular weight of the final product was measured by gel permeation chromatography (GPC), which showed no scission of the polymer chains after the hydrogenation. The results are shown in the table below:

**Table 1**

| Example | Catalyst | Catalyst Mass (g) | Reaction Temp (°C) | H₂ Pressure (psig) | Hydrogenation activity |
|---|---|---|---|---|---|
| IE1 | 0.42 wt_{Pt}% Fe₁₁Pt₈₉/SiO₂ | 0.2 | 140 | 1000 | 33 |
| IE2 | 0.38 wt_{Pt} Fe₂₁Pt₇₉/SiO₂ | 0.2 | 140 | 1000 | 29 |
| IE3 | 0.37 wt_{Pt} % Fe₄₈Pt₅₂/SiO₂ | 0.2 | 140 | 1000 | 24 |
| Comp1 | 0.38 wt_{Pt} % Fe₆₇Pt₃₃/SiO₂ | 0.2 | 140 | 1000 | 18 |
| Comp2 | 0.09 wt_{Pt} % Fe₈₈Pt₁₂/SiO₂ | 0.2 | 140 | 1000 | 8.5 |
| Comp3 | 0.41 wt_{Pt}% Pt/SiO₂ | 0.2 | 140 | 1000 | 27 |

The hydrogenation activity in the table above, refers to the as-measured rate of polymer hydrogenation, in the unit of moles of aromatic rings per hour per gram of Pt at a specific reaction temperature (140 °C), H₂ pressure (1000 psig), and at a polymer concentration (8.0 wt% polystyrene in cyclohexane).

**Catalytic stability over multiple hydrogenation cycles:** The catalytic stabilities of the samples were evaluated in a stainless steel reactor with a built-in self-filtration system. The catalytic stability measured the conversion of polystyrene into poly(vinylcyclohexane).

Test procedure: In a typical procedure, 4.8 g of the catalyst sample, 33.8 g of polystyrene (procured), and 500 mL of cyclohexane were loaded in a 1L Parr 316 SS reactor vessel under the pitch-blade stirring at 500 rpm. The reactor was purged with N₂ (120 psig) four times, followed by a pressure leak test. Then, the system was purged with H₂ (120 psig) four times. The reaction mixture was heated to 160 °C under 1000 psig of H₂ and kept at this temperature for 2 hr. After the reaction, the reactor was purged four times with N₂ (120 psig).

The polymer production solution inside the reactor was then collected by purging the mixture through the built-in filter. The clear polymer solution was analyzed by FT-IR to confirm the conversion of the unsaturated aromatic rings. A new batch of polystyrene solution (33.8 g of the polystyrene dissolved in 500 mL of cyclohexane) was added in the reactor vessel through a tubing and the 2nd cycle of catalytic hydrogenation was evaluated following the same procedure. The catalyst performance was evaluated for multiple cycles up to 4 cycles.

The test results for conversion after 4 cycles of hydrogenation is provided below:

**Table 2**

| | % Conversion of from polystyrene to poly(vinylcyclohexane) at 'n' cycle of hydrogenation | | | |
|---|---|---|---|---|
| | After n= 1 Cycle | After n = 2 Cycle | After n = 3 Cycle | After n = 4 Cycle |
| Inv2 | 100 | 100 | 100 | 100 |
| (Fe₂₁Pt₇₉/SiO₂) | | | | |
| Inv3 | 100 | 100 | 98.3 | 98.2 |
| (Fe₄₈Pt₅₂/SiO₂) | | | | |
| Comp3 | 100 | 100 | 97.0 | 96.4 |
| (Pt/SiO₂) | | | | |

From the above table, it is clear that the sample Inv2, even after 4 cycles of hydrogenation, maintained the conversion of polystyrene to poly(vinylcyclohexane) at 100%, whereas for the catalyst sample Comp3, the conversion dropped to 96.4% at fourth cycle of hydrogenation.

## Claims

1. A hydrogenation catalyst for hydrogenating a styrenic polymer, comprising:
a) ≥ 99.1 wt.% and ≤ 99.95 wt.% of a metal oxide support; and
b) ≥ 0.05 wt.% and ≤ 0.9 wt.% of metal alloy nanoparticles, wherein the metal alloy is represented by the formula FeₓPt₁₀₀₋ₓ, wherein `x' is a number ranging from > 10.0 and < 50.0, preferably > 10.0 and < 49.0, preferably > 10.0 and < 30.0, preferably > 10.0 and < 25.0.

2. The hydrogenation catalyst of claim 1, wherein the ratio of 'x/ 100-x' is > 0.11 and < 0.98, preferably > 0.11 and < 0.30.

3. The hydrogenation catalyst according to any one of claims 1-2, wherein the hydrogenation catalyst has a platinum metal loading of > 0.36 wt.% and < 0.45 wt.%, with regard to the total weight of the hydrogenation catalyst.

4. The hydrogenation catalyst according to any one of claims 1-3, wherein the metal oxide support is selected from silica, alumina, titania and combinations thereof, preferably wherein the metal oxide support is silica.

5. The hydrogenation catalyst according to any one of claims 1-4, wherein each of the metal alloy has an average particle size ranging from > 0.5 nm to < 5.0 nm, preferably >0.5 nm to < 3.0 nm.

6. The hydrogenation catalyst according to any one of claims 1-5, wherein the catalyst has a median particle diameter of < 10.0 µm, preferably < 5.0 µm, when determined using dynamic light scattering in accordance with ASTM E3247-20.

7. The hydrogenation catalyst according to any one of claims 1-6, wherein after subjecting the hydrogenation catalyst to 'n' cycles of hydrogenation, the catalyst retains a hydrogenation conversion of > 98.0 %, preferably > 99.0 %, wherein hydrogenation conversion is defined by the formula:
hydrogenation conversion = (1 - (moles of aromatic rings present in the styrenic polymer after hydrogenation / total moles of aromatic rings present in the styrenic polymer prior to hydrogenation)) × 100, further wherein 'n' is an integer ranging from 1 to 6, preferably 'n' is 4.

8. The hydrogenation catalyst according to any one of claims 1-7, wherein the metal oxide is silica and the value of 'x' is 48.0.

9. The hydrogenation catalyst according to any one of claims 1-7, wherein the metal oxide is silica and the value of 'x' is 21.0.

10. The hydrogenation catalyst according to any one of claims 1-7, wherein the metal oxide is silica and the value of 'x' is 11.0.

11. A process for preparing the hydrogenation catalyst according to any one of claims 1-10, the process comprises the steps of:
f) preparing an aqueous slurry comprising a metal oxide;
g) stirring the aqueous slurry in presence of a base;
h) adding a platinum salt and a ferric salt to the slurry obtained in step (b) to obtain a catalyst precursor;
i) separating the catalyst precursor from the slurry and drying the catalyst precursor; and
j) heating the catalyst precursor in presence of hydrogen and nitrogen at a temperature rate of 10 °C /min from 25 °C to 400 °C to obtain the hydrogenation catalyst, preferably wherein the ferric salt is added in an amount ranging from > 4.0 wt.% and < 32.0 wt.% with regard to the total weight of the platinum salt.

12. A method for the hydrogenation of a styrenic polymer, the method comprising contacting the hydrogenation catalyst according to any one of claims 1 to 10 with the styrenic polymer in presence of hydrogen (H2) under conditions sufficient to produce a hydrogenated polymer.

13. The method according to any one of claims 11-12, wherein the styrenic polymer is polystyrene and the hydrogenated polymer is poly (vinyl cyclohexane).

14. The method according to any one of claims 11-13, wherein the hydrogenation catalyst according to any one of claims 1 to 10 is contacted with the styrenic polymer at a temperature of 110 °C to 200 °C, preferably 120 °C to 145 °C and at a hydrogen pressure of ≥ 5000 kPa and ≤ 8000 kPa, preferably ≥ 5500 kPa and ≤ 7000 kPa, to produce a hydrogenated polymer.

15. Use of the catalyst as claimed in claims 1-10 for improving the hydrogenation conversion of a styrenic polymer after multiple cycles of hydrogenation, preferably over at least three cycles of hydrogenation.
